# EUROPEAN PATENT SPECIFICATION

(11) **EP 1 157 344 B1**
(45) Date of publication and mention of the grant of the patent: **20.11.2002**
(21) Application number: 00913595.5
(22) Date of filing: 25.02.2000
(51) Int. Cl.: G06F 17/30

(54) **PROXY SERVER AUGMENTING A CLIENT REQUEST WITH USER PROFILE DATA**
PROXY SERVER ZUR ERWEITERUNG EINER ANFRAGE EINES CLIENTS MIT DATEN ÜBER DEN BENUTZER
SERVEUR MANDATAIRE COMPLETANT UNE DEMANDE DE CLIENT A L'AIDE DE DONNEES DU PROFIL DE L'UTILISATEUR

(30) Priority: 26.02.1999 US 258242
(43) Date of publication of application: 28.11.2001
(73) Proprietor: America Online, Inc., Dulles, VA 20166 (US)
(72) Inventor: HENDREN, C., Hudson, III, Strasburg, VA 22657 (US)
(74) Representative: Tomlinson, Kerry John
(86) International application number: US0004698
(87) International publication number: WO00051031

(56) References cited:
- WO-A-98/33130
- US-A- 5 586 260
- PETITCOLAS F A P ET AL: "WebGroup: a secure group access control tool for the World-Wide Web" PROCEEDINGS SEVENTH IEEE INTERNATIONAL WORKSHOP ON ENABLING TECHNOLOGIES: INFRASTUCTURE FOR COLLABORATIVE ENTERPRISES (WET ICE '98) (CAT. NO.98TB100253), PROCEEDINGS OF WET ICE'98 - IEEE SEVENTH INTERNATIONAL WORKSHOP ON ENABLING TECHNOLOGIES: INFRAS, pages 301-305, XP002142486 1998, Los Alamitos, CA, USA, IEEE Comput. Soc, USA ISBN: 0-8186-8751-7
- GABBER E ET AL: "How to make personalized Web browsing simple, secure and anonymous" FINANCIAL CRYPTOGRAPHY FIRST INTERNATIONAL CONFERENCE, FC '97. PROCEEDINGS, FINANCIAL CRYPTOGRAPHY FIRST INTERNATIONAL CONFERENCE, FC'97. PROCEEDINGS, ANGUILLA, 24-28 FEB. 1997, [Online] pages 17-31, XP002059819 1997, Berlin, Germany, Springer-Verlag, Germany ISBN: 3-540-63594-7 Retrieved from the Internet: <URL:http://www.math.tau.ac.il/~matias/rec ent.html> [retrieved on 2000-07-13]

## Description

### BACKGROUND

Client computers can communicate with a server to remotely access information stored at the server. The transfer of information between the server and client computers may be provided using standard protocols and software applications. For example, a hypertext markup language (HTML) browser application at a client computer can communicate over the public Internet using TCP/IP and hypertext transfer protocols (HTTP) to receive web pages from a HTTP server. Web pages may include formatted text as well as multimedia elements, such as embedded graphics and sounds. Example browser applications include Netscape Navigator 4.0® and Microsoft Internet Explorer 4.0™.

When a server receives an information request from a client computer, the server may require information about a user of the client computer to respond to the information request. For example, a server providing a local news and weather service may need a user's home address in order to select appropriate news and weather data to send to the user. A server can obtain the needed user information by sending to the client computer a data input form that is displayed to the user. The input form may include a number of fields that the user can fill in with data and then send back to the server. The server may then use the data in the fields in responding to the requests.

Obtaining data using forms displayed to a user can be an unreliable, bothersome, and time consuming process. If a server requires a user to input lengthy personal data or requests data that was previously provided, the user may become frustrated with the information service system and discontinue or reduce use of the system. This may lead to reduced revenue for the information service system provider. Additionally, a user may provide intentionally or unintentionally incorrect information to a server thus decreasing a server's ability to reliably process information.

A server can use a web cookie to reduce repetitive data entry requests by that server. A web cookie is a token exchanged between a server and client computer that may be used to store data or to refer to and identify past transactions. A web cookie containing user information may be stored at a client computer by a server during a hypertext transfer protocol (HTTP) transaction, and retrieved by the server during subsequent HTTP transactions. In general, web cookies are unique to particular servers and are used to store data related to a particular server-client pairing. A server may include user data in a web cookie and store that web cookie at a client computer. When the client sends a subsequent data request to the server, the server may access the web cookie that was previously stored at the client. However, a web server may be unable to properly interpret another web server's web cookie and, therefore, may still need to request data items that are found in other servers' web cookies. Furthermore, since web cookies are stored at the client computer, they may be deleted or modified by a client computer user. Therefore, even though a server may store a web cookie at a client, the server cannot rely on a web cookie being present during subsequent transactions with the client.

The present inventors recognize that obtaining data about a user through forms and other direct input mechanisms can be time consuming and unreliable. Furthermore, the inventors recognize that existing methods of storing user data and tracking user interactions, such as web cookie mechanisms can be insufficient. Consequently, improved means of providing information about a user are desired.

US-A-5,586,260 discloses a method for authenticating a client to a server comprising the steps of calling a proxy server in an authentication gateway system, and passing an access key to the proxy server. In the proxy server, the access key is used to retrieve security credentials to impersonate the client. The proxy then calls the server on the client's behalf in a secure manner.

### SUMMARY

In general, in one aspect, the invention features a data transfer method performed at a proxy server. The method includes intercepting a data request directed from a client computer to a target server. The intercepted data request is then augmented at the proxy server by adding user profile information and sent to a target server.

Implementations may include one or more of the following features. User profile information may be added to the data request by adding a user profile field to the request. The user profile field may include a header identifying the field as a user profile field and the associated user profile data. The field may be a HTTP formatted field added to a HTTP request sent from a web browser to a server. In a secure implementation, the proxy server may encrypt the profile data to limit the target servers that can access the profile data. For example, an information service provider may implement a proxy server that adds encrypted profile data to a web request. The information service provider may then provide decryption information to a limited set of business partners allowed to access the profile data. To limit the servers that receive the profile data, the proxy server may maintain a list of web server addresses and may only add the profile data to a request when the request is directed to a web server on the list.

Implementations also may include one or more of the following features. The proxy server may identify a relevant user profile to add to a data request based on a network address received along with request messages from a client. To do so, a unique network address may be associated with the user. The network address may be assigned to a client computer when the client computer establishes a data connection with a network access point. Login data may then be received from a user and sent to the proxy server along with the network address. The login data and network address may be stored in a proxy server database allowing the proxy server to associate particular login data items with particular client network addresses. This may allow the proxy server to determine a user associated with a particular data request.

In general, in another aspect, the invention features a computer program residing on a computer-readable medium. The program includes instructions for causing a computer to receive a data request directed to a target server from a client computer. The program instructions may then cause the data request to be augmented with user profile information and sent to the target server.

Implementations of the program may include one or more of the following features. The program may instruct the computer to receive login data and a unique network address and associate the login data and network address with a user of the client computer. The login data and network address may be stored in a database The program may further cause the computer to access the login data by retrieving the record from the database based on receipt of the address assigned to the client computer in association with the receipt of the data request and to determine user profile information to be added to the data request based on the login data.

In general, in another aspect, the invention features a proxy server. The proxy server includes a database, a network interface, and a processor. The database includes records storing user profile information. The network interface is coupled to a network to exchange data with a client computer and with a target server. The processor is operatively coupled to the network interface, the database, and to a memory. The memory includes executable instructions for causing the processor to receive a data request from a client computer at the network interface, augment the data request by adding user profile information, and send the augmented data request to the network interface for delivery to the target server. The memory may also include instructions for causing the processor to receive from the network interface user access data comprising a user identification and a network address associated with the user's connection to a network.

In general, in another aspect, the invention features a method of processing a data request. The method includes receiving a hypertext transfer protocol (HTTP)data request at a server from a proxy server, identifying a field added to the data request by the proxy server, determining a response to the data request based on the user profile data; and sending the response to the proxy server for delivery to a client computer. The added field includes user profile data and a header identifying the user profile data. The user profile data may received in an encrypted form and decrypted by the server.

The details of one or more embodiments of the invention are set forth in the accompanying drawings and the description below. Implementations may provide advantages including reduction of redundant data entry, reduction of user data entry errors, secure storage of user data, and automated user profile determination and dissemination. Other features, objects, and advantages of the invention will be apparent from the description and drawings, and from the claims.

### DESCRIPTION OF DRAWINGS

FIG. 1 shows computers connected by a network.
FIGS. 2A and 2B show exemplary HTTP request data.
FIGS. 3A and 3B are flowcharts.

### DETAILED DESCRIPTION

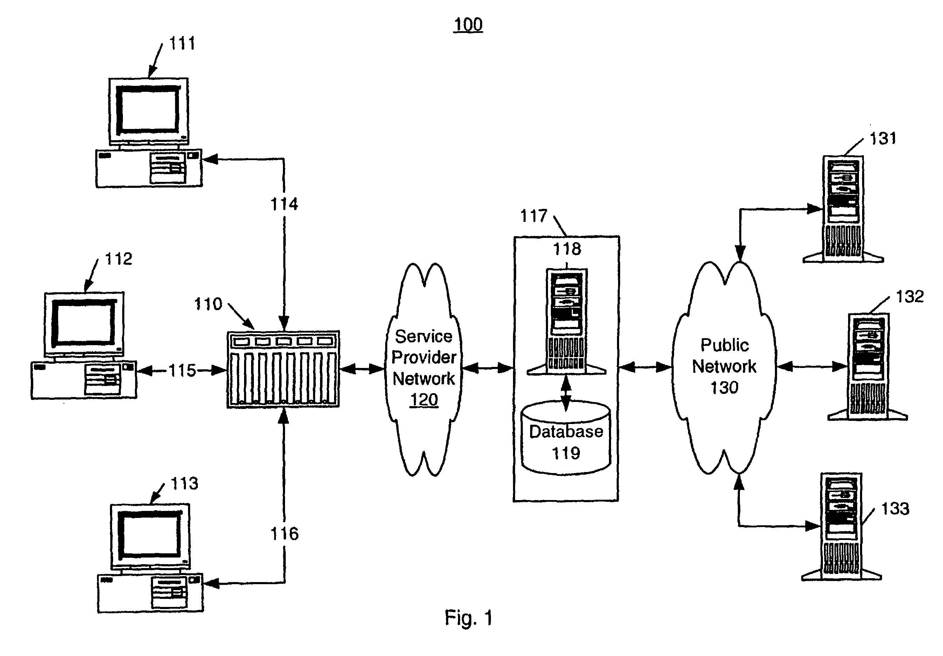

Fig. 1 shows a network 100 that includes server computers 131-133 and client computers 111-113. Server computers 131-133 may execute hypertext transfer protocol (HTTP) server software to respond to data requests from HTTP-based web browsers executing at client computers 111-113. Client computers 111-113 can send HTTP data requests to servers 131-133 over data paths that include access connections 114-116, a service provider's point of presence (POP) 110, network 120, proxy server 117. and network 130. The service provider's POP 110 includes data communications equipment that enables and regulates communication between client computers 111-113 and the service provider's network 120. For example, POP 110 may include dial-up modem banks, cable modem banks, wireless communications equipment, or other data transmission equipment.

Access to a service provider's POP 110 may be restricted to certain users of the client computers 111-113. To enforce access restrictions, POP 110 may implement security and authentication mechanisms such as login verification. A login verification mechanism may require a user to input a valid user name and password to obtain access to the service provider's network 120. If the user name and password are invalid, the user may be disconnected. Security and authentication mechanisms also may be implemented at a separate login server connected to the service provider's network 120 and/or POP 110.

After a valid connection has been established between a client computer and POP 110, data may be exchanged between software applications running on the client computer, and applications running on other computers on the service provider's network 120. The service provider's network 120 may be interconnected with another network 130 by a proxy server 117 that can exchange data between the service provider's network 120 and computers on another network 130.

Proxy server 117 can function as a surrogate for another computer. For example, proxy server 117 may intercept HTTP data requests sent between a browser application at client computer 111 and HTTP servers at computers 131-133. When the proxy server 117 intercepts a data request, it may attempt to fulfill the data request using data stored at a local database or hard disk drive 119. If the proxy server 117 has the needed data, the data can be returned to the client computer 111 without requiring further interaction with servers 131-133. If the proxy server 117 is unable to fulfill the request, it may forward the request to a server 131-133, receive a response from that server, and send the response to the client computer 111. The proxy server 117 also may store response data on a hard disk drive or local database 119 for future use. Networks 120 and 130 also may be interconnected by a gateway, bridge, router, or other interconnection device instead of, or in addition to, proxy server 117.

A server 131-133 may be configured to receive data requests from multiple client computers 111-113 which may be generated by multiple different users of those client computers. Access to particular server computers 131-133 may be restricted to particular users of the client computers 111-113 similar to the manner in which access to POP 110 is restricted. Thus a user may provide name and password data when accessing the POP 110, may again provide name and password data when accessing server 131, and may yet again provide name and password data when accessing server 132. Implementations may also use different access control mechanisms at POP 110 and at each server 131-133.

Servers 131-133 also may require other types of data from a user in order to process information requests. For example, a local weather information server may require a user to input the user's home address each time local weather is requested. A commercial web site may also require the home address in order to determine a user's shipping address. Input of such user data may be time consuming and redundant.

User data entry may be reduced by storing user profile information at a proxy server 117 and automatically sending the profile information to servers when data request are made. Thus, an information service provider (ISP) may store user demographic data or other user data at proxy server 117 and automatically send that data to selected web sites along with data request being sent to those web sites. In a HTTP implementation, data request may use the HTTP protocol. The proxy server 117 may intercept HTTP request sent from a web browser application at a client computer 111 to a HTTP server 131. The proxy 117 may then insert user profile information in the HTTP request and send the modified HTTP request to a server 131.

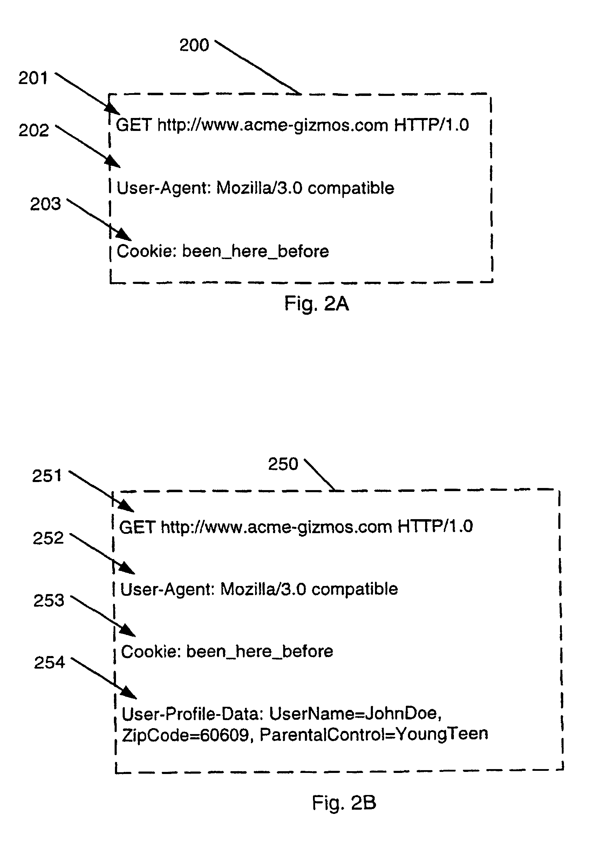

Fig. 2A shows a HTTP request 200. The HTTP request 200 includes a structured sequence of fields 201-203. Each field 201-203 includes a HTTP header and data associated with the header. HTTP headers provide a structured description of each HTTP request field and each field's data. For example, field 201 indicates that the HTTP request is a "GET" request to obtain a default web page from the server "www.acme-gizmos.com". Field 202 includes the HTTP header "User-Agent:" which indicating that the field's data "Mozilla/3.0 compatible" designates the type of browser generating the request 200. Similarly, field 203 includes the HTTP header "Cookie:" indicating that the data "been_here_before" is a web cookie.

The HTTP request 200 may be sent from a client computer 111 to proxy 117 and forwarded through the proxy 117 for delivery to a server 131. The proxy server 117 can insert a user profile in the request 200 as the request is forwarded through the proxy. Referring to Figs. 1 and 2A, when the proxy 117 receives the HTTP request 200, the proxy 117 can modify the request 200 to include user profile information. To modify the request 200, the proxy server 117 first determines a user associated with the request.

To determine the user associated with a HTTP request, a proxy server may use a table or database that can associate user identity information with network connection information unique to each active user. The user identity information and network connection information may be provided to the proxy server 117 during user log-in to the POP 110 or to a login server.

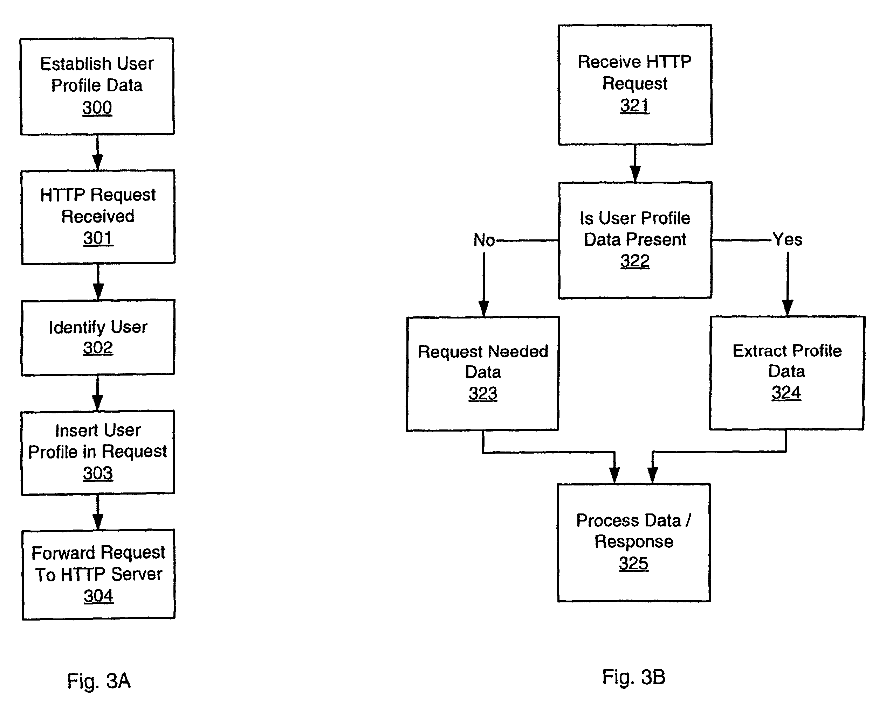

For example, referring to Fig. 3A, when a user connects to a network service provider's network by submitting name and password information to POP 110, a TCP/IP address and port, and/or other user-unique network connection information may be associated with the user's data transfer connection. The POP 110 or a login server may then send the user name and the user's unique network connection information to the proxy server 117 where it is stored in a database (step 300). When the proxy server 117 receives a subsequent HTTP request 200 (step 301), the proxy server can identify the user associated with the request 200 by querying the database of stored name and network connection associations. The proxy server's database query may be based on network connection information associated with a TCP/IP data transfer connection over which the HTTP request was transferred.

When the proxy server 117 has identified the user (step 302), the proxy server then may retrieve a user profile associated with that user from its database 119. The user profile information may be inserted by the proxy server as one or more fields in the HTTP request 200 (step 303). Fig. 2B shows a modified version 250 of the HTTP request 200 after user profile information has been inserted. The modified HTTP request 250 includes field 204 which includes user profile information inserted by the proxy server 117. Field 204 includes the HTTP header "User-Profile-Data:" indicating that the data "UserName=John_Doe, ZipCode=60609, ParentalControl=YoungTeen is user profile data. After the proxy server 117 has generated the modified request 250, it may then be forwarded to a server 131.

Referring to Fig. 3B, the modified request 250 is then received at a web server (step 321). Particular web servers on a network may or may not recognize the user profile data field 254. A web server that is not configured to recognize the user profile field 254 may ignore the data in field 254 and instead process the other fields in the modified request 250. A web server that is configured to recognize the user profile field 254 can extract the profile data from the field (steps 322 and 324) and use the profile data to generate or customize data sent in response to a user (step 325). For example, a tourist information web server may customize a page based on a user's age, and interest. Thus, for example, if a user's profile indicates that their interest include art and music, the tourist information web server may provide them with a list of museums and concert halls. On the other hand, if the user's interest indicates that they like canoeing and hiking, the tourist information server may provide them with a list of public parks. If the user profile field is not present in a web page, the server may request user input to obtain needed data (step 322-323) and then generate a subsequent response to the user (step 325).

In a secure implementation, profile data sent from the proxy server 117 to a server 131-133 may be in an encrypted form. For example, field 206 may include a HTTP header indicating that the field contains user profile data in an encrypted form. Encryption of profile data may help ensure that only authorized web servers 131-133 will be able to extract a user's profile data. Encryption may be performed using a public key cryptography algorithms. In a public key implementation, a web server 131-133 may publish its public key at a uniform resource locator (URL) address known to the proxy server. Other encryption algorithms may also be used. For example, the Rivest, Shamir, Adelman (RSA) encryption technique may be used. Encryption of profile data helps to ensure that only authorized web servers can access the profile data. For example, in a commercial application, credit card information stored at the proxy server 117 may be encrypted by the proxy server prior to that information being sent to a web server in a user profile data field.

User profile data may be stored at the proxy server 117 by an information service provider (ISP) through a database 119 access interface. The access interface may implement a query language such as structured query language (SQL) In such an implementation, SQL commands may be sent to the database 119 from a network configuration or database access terminal. Other method of provisioning profile data for use by the proxy server 117 may also be used. User profile data stored at the proxy server 117 may be updated by a computer system coupled to the network 120, by the proxy server 117, or by a web server 131-133. The proxy server 117 may update stored user profile data by monitoring data requests from a client and responses to those requests obtained from web servers. For example, the proxy server may update a list of visited web sites stored in a users' profile based on request received from a client computer. A web server 131-133 may also be configured to update profile information stored at the proxy server. For example, the web server, in responding to a data request, may insert a user data profile update field in the HTTP request data being sent to the proxy server 117. The proxy server may then extract the update field information and use it to update a stored profile. A web server may also update profile data by transmitting profile update information separately from data being sent to a user. For example, web server 131 may initiate a TCP/IP connection directly to a database or other application at the proxy 117 that can receive profile update information and update stored profile data at the proxy 117.

A proxy server 117 may selectively insert profile data in a HTTP request depending on the destination address of the request. For example, profile data may be inserted in a HTTP request being sent to server 131 but not in a request being sent to server 133. The proxy server 117 may determine web servers that are to receive profile data based on destination site filtering information stored at the proxy server. Thus, an on-line service provider (OSP) or information service provider (ISP) may establish filtering conditions that configure a proxy server 117 to send user profile data to business partners and affiliated web sites, but not to competitors. The filtering information may be a database of internet host names, internet protocol addresses, and/or wild-card characters to determine servers that are permitted and/or forbidden to receive profile data.

The profile data stored at the proxy server may include, for example, the login name and password of a user of the client computer, additional data maintained by an information service provider, such as demographic information, a history of the user's data requests, age, gender, interest, and information that is determined dynamically by the exchange of data between the proxy server and web servers.

The invention may be implemented in digital electronic circuitry, or in computer hardware, firmware, software, or in combinations of them. Apparatus of the invention may be implemented in a computer program product tangibly embodied in a machine-readable storage device for execution by a programmable processor; and method steps of the invention may be performed by a programmable processor executing a program of instructions to perform functions of the invention by operating on input data and generating output. The invention may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language. Suitable processors include, by way of example. both general and special purpose microprocessors. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing may be supplemented by, or incorporated in, specially-designed ASICs (application-specific integrated circuits).

A number of embodiments of the present invention have been described. Nevertheless, it will be understood that various modifications may be made without departing from the scope of the invention. For example, server, proxy, and client protocols need not use the HTTP protocol. Alternative protocols and data formats may be used such as file transfer protocol (FTP) or network news transfer protocol (NNTP). Accordingly, other embodiments are within the scope of the invention, which is defined by the following claims.

## Claims

1. A data transfer method performed at a proxy server (117), the method comprising:
intercepting a data request from a client computer (111-113) that is directed to a target server (131-133), **characterised by**:
augmenting the data request by adding user profile information; and
sending the augmented data request to the target server.

2. The method of claim 1, the method further comprising:
establishing a data connection between the client computer and a network access point (110);
receiving login data from a client computer user; and
sending the login data to the proxy server (117).

3. The method of claim 2, wherein:
establishing a data connection comprises assigning a network address to the client computer;
receiving login data comprises receiving a user identification; and
sending the login data comprises sending the user identification and the network address.

4. The method of claim 3, wherein:
intercepting a data request further comprises receiving the network address; and
augmenting the data request comprises retrieving user profile information from a proxy server database (119) based on the received network address.

5. The method of claim 4, wherein augmenting the data request based on the received network address further comprises retrieving the user identification from the proxy server database based on the received network address and accessing user profile information based on the user identification.

6. The method of any preceding claim, wherein user profile information comprises data associated with a current user of the client computer.

7. The method of any preceding claim, the method further comprising receiving user profile information at the proxy server from another computer and storing the user profile information in a proxy server database.

8. The method of any preceding claim, wherein the data request comprises a plurality of fields, each field comprising a header and data associated with the header.

9. The method of claim 8, wherein the data request is a hypertext transfer protocol (HTTP) data request, the target server is a HTTP server, the client computer comprises a web browser application, and each header in the plurality of fields comprises a HTTP data request header.

10. The method of claim 8 or 9, wherein adding user profile information comprises adding a field, the field comprising a profile header identifying the added field as a user profile field and profile data associated with the user.

11. The method of claim 10, wherein the profile data comprises encrypted data.

12. The method of claim 11, the method further comprising:
receiving the augmented data request at the target server; and
decrypting the encrypted profile data.

13. The method of any preceding claim, the method further comprising identifying the target server as a server permitted to receive user profile information.

14. The method of any preceding claim, the data transfer method comprising an electronic commerce transaction.

15. The method of claim 14, wherein the client computer is that of a consumer, the data request is an order and the target server is a commercial web site.

16. A computer program residing on a computer-readable medium, the program comprising instructions for causing a computer to:
receive a data request from a client computer directed at a target server;
augment the data request by adding user profile information; and
send the augmented data request to the target server.

17. The computer program of claim 16, the program further comprising instructions for causing a computer to:
receive a network address assigned to the client computer and login data associated with a user of the client computer; and
store the network address and login data in a record in a database.

18. The computer program of claim 16 or 17, the program further comprising instructions for causing the computer to access the login data by retrieving the record from the database based on receipt of the address assigned to the client computer in association with the receipt of the data request.

19. The computer program of claim 18, the program further comprising instructions for causing the computer to determine user profile information to be added to the data request based on the login data.

20. A proxy server (117), the proxy server comprising:
a network interface operatively coupled to a network to exchange data with a client computer (111-113) and with a target server (131-133); and **characterised by**:
a database (119) comprising records storing user profile information; and
a processor operatively coupled to the network interface, the database, and a memory comprising executable instructions for causing the processor to receive a data request from a client computer at the network interface, augment the data request by adding user profile information, and send the augmented data request to the network interface for delivery to the target server.

21. The server of claim 20, wherein the memory further comprises instructions for causing the processor to receive, from the network interface, user access data comprising a user identification and a network address associated with the user's connection to a network.

22. A method of processing a data request, the method comprising:
receiving a hypertext transfer protocol (HTTP) data request at a server (131-133) from a proxy server (117); **characterised by**:
identifying a field added to the data request by the proxy server and comprising user profile data and a header identifying the user profile data;
determining a response to the data request based on the user profile data;
and sending the response to the proxy server for delivery to a client computer (111-113).

23. The method of claim 22, wherein the user profile data is encrypted and determining a response based on the user profile data comprises decrypting the user profile data.

## Patentansprüche

1. Datenübertragungsverfahren, das an einem Proxyserver (117) durchgeführt wird und folgende Schritte umfaßt:
Abfangen einer Datenanforderung von einem Kunden bzw. Clientcomputer (111-113), die zu einem Zielserver (131-133) gerichtet ist, **gekennzeichnet durch**:
Erweitern bzw. Vergrößern der Datenanforderung **durch** Hinzufügen von Nutzerprofilinformationen, und
Senden der vergrößerten Datenanforderung zu dem Zielserver.

2. Verfahren nach Anspruch 1, das weiterhin folgende Schritte umfaßt:
Einrichten einer Datenverbindung zwischen dem Clientcomputer und einem Netzwerkzugriffspunkt (110),
Empfangen von Anmelde- bzw. Kennungsdaten von einem Clientcomputernutzer, und
Senden der Kennungsdaten zu dem Proxyserver (117).

3. Verfahren nach Anspruch 2, bei dem der Schritt des Einrichtens einer Datenverbindung den Schritt des Zuordnens einer Netzwerkadresse zu dem Clientcomputer umfaßt, der Schritt des Empfangens von Kennungsdaten den Schritt des Empfangens einer Nutzerkennung umfaßt, und
der Schritt des Sendens der Kennungsdaten den Schritt des Sendens der Nutzerkennung und der Netzwerkadresse umfaßt.

4. Verfahren nach Anspruch 3, bei dem der Schritt des Abfangens einer Datenanforderung weiterhin den Schritt des Empfangens der Netzwerkadresse umfaßt, und
der Schritt des Vergrößerns der Datenanforderung den Schritt des Wiedergewinnens einer Nutzerprofilinformation von einer Proxyserverdatenbank (119) umfaßt, die auf der empfangenen Netzwerkadresse basiert.

5. Verfahren nach Anspruch 4, bei dem der Schritt des Vergrößerns der Datenanforderung basierend auf der empfangenen Netzwerkadresse weiterhin den Schritt des Wiedergewinnens der Nutzerkennung von der Proxyserverdatenbank umfaßt, basierend auf der empfangenen Netzwerkadresse und den Schritt des Zugreifens auf Nutzerprofilinformationen basierend auf der Nutzerkennung.

6. Verfahren nach einem der vorstehenden Ansprüche, bei dem die Benutzerprofilinformationen Daten umfassen, die einem gegenwärtigen Nutzer des Clientcomputers zugeordnet sind.

7. Verfahren nach einem der vorstehenden Ansprüche, das weiterhin den Schritt des Empfangens von Benutzerprofilinformationen bei dem Proxyserver von einem weiteren Computer und den Schritt des Speicherns der Benutzerprofilinformationen in einer Proxyserverdatenbank umfaßt.

8. Verfahren nach einem der vorstehenden Ansprüche, bei dem die Datenanforderung eine Vielzahl von Feldern umfaßt, wobei jedes Feld einen Kopfblock bzw. Header und mit dem Kopfblock verbundene Daten umfaßt.

9. Verfahren nach Anspruch 8, bei dem die Datenanforderung eine Hypertextübertragungsprotokoll (HTTP) -Datenanforderung ist, der Zielserver ein HTTP-Server ist, der Clientcomputer eine Webbrowser-Anwendung umfaßt und jeder Kopfblock in der Vielzahl der Felder einen HTTP-Datenanforderungskopfblock umfaßt.

10. Verfahren nach Anspruch 8 oder 9, bei dem der Schritt des Hinzufügens von Benutzerprofilinformationen den Schritt des Hinzufügens eines Feldes umfaßt, wobei das Feld einen Profilkopfblock umfaßt, der das hinzugefügte Feld als ein Benutzerprofilfeld und dem Benutzer zugeordnete Profildaten identifiziert.

11. Verfahren nach Anspruch 10, bei dem die Profildaten verschlüsselte Daten umfassen.

12. Verfahren nach Anspruch 11, das weiterhin den Schritt des Empfangens der vergrößerten Datenanforderung bei dem Zielserver umfaßt und den Schritt des Entschlüsselns der verschlüsselten Profildaten.

13. Verfahren nach einem der vorstehenden Ansprüche, wobei das Verfahren weiterhin den Schritt des Identifizierens des Zielservers als ein Server umfaßt, der Benutzerprofilinformationen empfangen darf.

14. Verfahren nach einem der vorstehenden Ansprüche, wobei das Datenübertragungsverfahren eine elektronische Geschäftstransaktion umfaßt.

15. Verfahren nach Anspruch 14, bei dem der Clientcomputer der Computer eines Kunden bzw. Verbrauchers ist, die Datenanforderung ein Auftrag bzw. eine Anfrage ist und der Zielserver eine kommerzielle Webseite ist.

16. Computerprogramm auf einem computerlesbaren Medium, das Befehle umfaßt, um zu bewirken, daß ein Computer:
eine Datenanforderung von einem Clientcomputer, die zu einem Zielrechner gerichtet ist, empfängt,
die Datenanforderung durch Hinzufügen von Nutzerprofilinformationen vergrößert, und
die vergrößerte Datenanforderung zu dem Zielserver schickt.

17. Computerprogramm nach Anspruch 16, das weiterhin Befehle umfaßt, die bewirken, daß ein Computer:
eine Netzwerkadresse empfängt, die einem Clientcomputer zugeordnet ist, und Kennungsdaten, die einem Nutzer des Clientcomputers zugeordnet sind, und
die Netzwerkadresse und Kennungsdaten in einer Aufzeichnung in einer Datenbank speichert.

18. Computerprogramm nach Anspruch 16 oder 17, das weiterhin Befehle umfaßt, die bewirken, daß der Computer auf die Kennungsdaten durch Wiedergewinnen der Aufzeichnung von der Datenbank zugreift, basierend auf dem Empfang der Adresse, die dem Clientcomputer in Verbindung mit dem Empfang der Datenanforderung zugeordnet ist.

19. Computerprogramm nach Anspruch 18, das weiterhin Befehle aufweist, die bewirken, daß der Computer Benutzerprofilinformationen bestimmt, die der Datenanforderung basierend auf den Kennungsdaten hinzuzufügen sind.

20. Proxyserver (117) mit:
einer Netzwerkschnittstelle, die betriebswirksam mit einem Netzwerk verbunden ist, um Daten mit einem Clientcomputer (111-113) und mit einem Zielserver (131-133) auszutauschen, und **gekennzeichnet ist durch**:
eine Datenbank (119), die Aufzeichnungen umfaßt, die Nutzerprofilinformationen speichern, und
einen Prozessor, der betriebswirksam mit der Netzwerkschnittstelle verbunden ist, wobei die Datenbank und ein Speicher ausführbare Befehle aufweisen, um zu bewirken, daß der Prozessor eine Datenanforderung von einem Clientcomputer bei der Netzwerkschnittstelle empfängt, die Datenanforderung **durch** Hinzufügen von Nutzerprofilinformationen vergrößert, und die vergrößerte Datenanforderung zu der Netzwerkschnittstelle zum Liefern zu dem Zielserver schickt.

21. Server nach Anspruch 20, bei dem der Speicher weiterhin Befehle aufweist, um zu bewirken, daß der Prozessor von der Netzwerkschnittstelle Nutzerzugriffsdaten empfängt, die eine Benutzerkennung und eine Netzwerkadresse umfassen, die einer Verbindung des, Nutzers zu einem Netzwerk zugeordnet ist.

22. Verfahren zum Bearbeiten einer Datenanforderung mit folgenden Schritten:
Empfangen einer Hypertextübertragungsprotokoll(HTTP)-Datenanforderung bei einem Server (131-133) von einem Proxyserver (117), **gekennzeichnet durch**:
Identifizieren eines Feldes, das zu der Datenanforderung **durch** den Proxyserver zugefügt ist und Benutzerprofildaten und einen Kopfblock umfaßt, der die Benutzerprofildaten kennzeichnet,
Bestimmen einer Antwort zu der Datenanforderung basierend auf den Benutzerprofildaten, und
Senden der Antwort zu dem Proxyserver zum Liefern zu einem Clientcomputer (111-113).

23. Verfahren nach Anspruch 22, bei dem die Benutzerprofildaten verschlüsselt sind, und der Schritt des Bestimmens einer Antwort basierend auf den Benutzerprofildaten den Schritt des Entschlüsselns der Benutzerprofildaten umfaßt.

## Revendications

1. Procédé de transfert de données effectué au niveau d'un serveur mandataire (117), le procédé comprenant :
l'interception d'une demande de données en provenance d'un ordinateur client (111 à 113) qui est destinée à un serveur cible (131 à 133), **caractérisé par** :
le complément de la demande de données en ajoutant des informations de profil d'utilisateur ; et
l'envoi de la demande de données complétée au serveur cible.

2. Procédé selon la revendication 1, le procédé comprenant de plus :
l'établissement d'une connexion de données entre l'ordinateur client et un point d'accès au réseau (110);
la réception de données d'ouverture de session en provenance d'un utilisateur de l'ordinateur client ; et
l'envoi des données d'ouverture de session au serveur mandataire (117).

3. Procédé selon la revendication 2, dans lequel :
l'établissement d'une connexion de données comprend l'attribution d'une adresse de réseau à l'ordinateur client ;
la réception de données d'ouverture de session comprend la réception d'une identification d'utilisateur ; et
l'envoi des données d'ouverture de session comprend l'envoi de l'identification d'utilisateur et de l'adresse de réseau.

4. Procédé selon la revendication 3, dans lequel :
l'interception d'une demande de données comprend de plus la réception de l'adresse de réseau ; et
le complément de la demande de données comprend la récupération d'informations de profil d'utilisateur à partir d'une base de données de serveur mandataire (119) sur la base de l'adresse de réseau reçue.

5. Procédé selon la revendication 4, dans lequel le complément de la demande de données sur la base de l'adresse de réseau reçue comprend de plus la récupération de l'identification d'utilisateur à partir de la base de données de serveur mandataire sur la base de l'adresse de réseau reçue et l'accès à des informations de profil d'utilisateur sur la base de l'identification d'utilisateur.

6. Procédé selon l'une quelconque des revendications précédentes, dans lequel les informations de profil d'utilisateur comprennent des données associées à un utilisateur courant de l'ordinateur client.

7. Procédé selon l'une quelconque des revendications précédentes, le procédé comprenant de plus la réception d'informations de profil d'utilisateur au niveau du serveur mandataire en provenance d'un autre ordinateur et le stockage des informations de profil d'utilisateur dans une base de données de serveur mandataire.

8. Procédé selon l'une quelconque des revendications précédentes, dans lequel la demande de données comprend une pluralité de champs, chaque champ comprenant un en-tête et des données associées à l'en-tête.

9. Procédé selon la revendication 8, dans lequel la demande de données est une demande de données de protocole de transfert d'hypertexte (HTTP), le serveur cible est un serveur HTTP, l'ordinateur client comprend une application de navigation Internet, et chaque en-tête dans la pluralité de champs comprend un en-tête de demande de données HTTP.

10. Procédé selon la revendication 8 ou 9, dans lequel l'ajout d'informations de profil d'utilisateur comprend l'ajout d'un champ, le champ comprenant un en-tête de profil identifiant le champ ajouté en tant que champ de profil d'utilisateur et des données de profil associées à l'utilisateur.

11. Procédé selon la revendication 10, dans lequel les données de profil comprennent des données cryptées.

12. Procédé selon la revendication 11, le procédé comprenant de plus :
la réception de la demande de données complétée au niveau du serveur cible ; et
le cryptage des données de profil cryptées.

13. Procédé selon l'une quelconque des revendications précédentes, le procédé comprenant de plus l'identification du serveur cible en tant que serveur autorisé à recevoir des informations de profil d'utilisateur.

14. Procédé selon l'une quelconque des revendications précédentes, le procédé de transfert de données comprenant une transaction de commerce électronique.

15. Procédé selon la revendication 14, dans lequel l'ordinateur client est celui d'un consommateur, la demande de données est une commande et le serveur cible est un site Internet commercial.

16. Programme informatique résidant sur un support lisible par ordinateur, le programme comprenant des instructions pour amener un ordinateur à :
recevoir une demande de données en provenance d'un ordinateur client destinée à un serveur cible ;
compléter la demande de données en ajoutant des informations de profil d'utilisateur ; et
envoyer la demande de données complétée au serveur cible.

17. Programme informatique selon la revendication 16, le programme comprenant de plus des instructions pour amener un ordinateur à :
recevoir une adresse de réseau attribuée à l'ordinateur client et des données d'ouverture de session associées à un utilisateur de l'ordinateur client ; et
stocker l'adresse de réseau et les données d'ouverture de session dans un enregistrement dans une base de données.

18. Programme informatique selon la revendication 16 ou 17, le programme comprenant de plus des instructions pour amener l'ordinateur à avoir accès aux données d'ouverture de session en récupérant l'enregistrement à partir de la base de données sur la base de la réception de l'adresse attribuée à l'ordinateur client en collaboration avec la réception de la demande de données.

19. Programme informatique selon la revendication 18, le programme comprenant de plus des instructions pour amener l'ordinateur à déterminer des informations de profil d'utilisateur à ajouter à la demande de données sur la base des données d'ouverture de session.

20. Serveur mandataire (117), le serveur mandataire comprenant :
une interface de réseau reliée de manière opérationnelle à un réseau pour échanger des données avec un ordinateur client (111 à 113) et avec un serveur cible (131 à 133) ; et **caractérisé par** :
une base de données (119) comprenant des enregistrements stockant des informations de profil d'utilisateur ; et
un processeur relié de manière opérationnelle à l'interface de réseau, à la base de données et à une mémoire comprenant des instructions exécutables pour amener le processeur à recevoir une demande de données en provenance d'un ordinateur client au niveau de l'interface de réseau, à compléter la demande de données en ajoutant des informations de profil d'utilisateur, et à envoyer la demande de données complétée à l'interface de réseau pour la délivrer au serveur cible.

21. Serveur selon la revendication 20, dans lequel la mémoire comprend de plus des instructions pour amener le processeur à recevoir, en provenance de l'interface de réseau, des données d'accès d'utilisateur comprenant une identification d'utilisateur et une adresse de réseau associée à la connexion de l'utilisateur à un réseau.

22. Procédé de traitement d'une demande de données, le procédé comprenant :
la réception d'une demande de données de protocole de transfert d'hypertexte (HTTP) au niveau d'un serveur (131 à 133) en provenance d'un serveur mandataire (117) ; **caractérisé par** :
l'identification d'un champ ajouté à la demande de données par le serveur mandataire et comprenant des données de profil d'utilisateur et un en-tète identifiant les données de profil d'utilisateur ;
la détermination d'une réponse à la demande de données sur la base des données de profil d'utilisateur ;
et l'envoi de la réponse au serveur mandataire pour la délivrer à un ordinateur client (111 à 113).

23. Procédé selon la revendication 22, dans lequel les données de profil d'utilisateur sont cryptées, et la détermination d'une réponse sur la base des données de profil d'utilisateur comprend le cryptage des données de profil d'utilisateur.
